# EUROPÄISCHE PATENTSCHRIFT

(11) **EP 1 652 585 B1**
(45) Veröffentlichungstag und Bekanntmachung des Hinweises auf die Patenterteilung: **21.05.2008**
(21) Anmeldenummer: 04025440.1
(22) Anmeldetag: 26.10.2004
(51) Int. Cl.: B03B 9/06, C10L 5/46

(54) **Verfahren und Anlage zur Behandlung von Restmüll aus Haushalten und Gewerbebetrieben**
Process and plant for treating domestic or industrial residual waste
Procédé et installation de traitement de déchets résiduels urbains ou industriels

(43) Veröffentlichungstag der Anmeldung: 03.05.2006
(73) Patentinhaber: REMONDIS Assets & Services GmbH & Co. KG, 44536 Lünen (DE)
(72) Erfinder: Fendel, Ansgar, Dr., 44141 Dortmund (DE); Timmel, Georg, Dr., 59368 Werne (DE)
(74) Vertreter: Seitz, Ralf Hans Frank

(56) Entgegenhaltungen:
- EP-A- 0 760 258
- EP-A- 1 018 371
- CH-A- 688 990
- DE-A1- 2 061 574
- DE-A1- 10 028 976
- DE-A1- 10 125 408
- DE-A1- 19 634 741

## Beschreibung

Die Erfindung betrifft verbesserte Verfahren und Anlagen zur Behandlung von Restmüll bzw. Restabfällen aus Haushalten und Gewerbebetrieben in Behandlungsanlagen mit mechanischer und/oder biologischer Aufbereitung zur Rückgewinnung von Sekundärrohstoffen, zur Optimierung der Abtrennung von Wertstoffen, vor allem von Metallen und Holz, sowie einer Fraktion, die zu Ersatzbrennstoff weiterverarbeitet werden kann, zur Reduzierung der Menge an Restabfällen, die in Verbrennungsanlagen beseitigt werden müssen, und zur Erleichterung der Einhaltung der gesetzlich vorgeschriebenen Grenzwerte für die auf Deponien abzulagernde Restfraktion.

Im Rahmen des Umweltschutzes kommt der Behandlung von Abfällen eine ebenso wichtige Rolle zu wie dem Kampf gegen Luftverunreinigung und Wasserverschmutzung. Die unsachgemäße Handhabung von Abfällen kann die Umwelt und insbesondere Gesundheit und Sachwerte beeinträchtigen und verhindert die Nutzung von Sekundärrohstoffen.

Ziel der Behandlung der Restabfälle (des Restmülls) aus Haushalten und Gewerbebetrieben in Behandlungsanlagen mit mechanischer und/oder biologischer Aufbereitung ist in der überwiegenden Zahl der derzeit bestehenden Anlagen die Abtrennung von Wertstoffen (vor allem von Metallen, Holz sowie einer Fraktion, die zu Ersatzbrennstoff weiterverarbeitet werden kann), die Reduzierung der Menge an Restabfällen, die in Verbrennungsanlagen beseitigt werden muss, sowie die Einhaltung von Grenzwerten für die auf Deponien abzulagernde Restfraktion (Heizwert bzw. TOC (total organic carbon) im Feststoff, Inhaltsstoffe im Eluat und dgl.).

Die derzeit in Betrieb befindlichen Behandlungsanlagen mit mechanischer und/oder biologischer Aufbereitung umfassen im Wesentlichen die folgenden Stufen:
a) Vorsortierung des Restmülls (der Restabfälle), vorzugsweise mittels Bagger oder Radlader, zur Abtrennung von Störstofffraktionen und/oder Wertstofffraktionen,
b) mechanische Aufbereitung des vorsortierten Restmülls (der vorsortierten Restabfälle) durch Vorzerkleinern, vorzugsweise mittels eines Rotorreißers, und/oder Hauptzerkleinern in einer Semiautogenmühle sowie Hauptklassieren zur Auftrennung in eine Feinfraktion und in eine Grobfraktion,
c) Auftrennung der Grobfraktion einerseits in Schwergut, das weiterverarbeitet wird zu Nichteisenmetall(NE)-Vorkonzentrat und magnetischem Produkt, und andererseits in eine heizwertreiche Fraktion, die zu Ersatzbrennstoffen weiterverarbeitet wird, sowie
d) Auftrennung der Feinfraktion durch Feinklassieren einerseits in eine Mittelfraktion, die durch mechanische Aufbereitung zu einer Fraktion verarbeitet wird, die thermisch beseitigt und/oder zu Ersatzbrennstoffen verarbeitet wird, und
   andererseits in eine organikreiche Feinfraktion, die nach mechanischer Behandlung einer biologischen Behandlung unterworfen und anschließend auf einer Deponie abgelagert wird.
Eine derartige Anlage ist im Wesentlichen aus DE-A-101 25 408 bekannt.

A. Besonders gut geeignet für eine hohe Verwertungsquote des Restmülls (der Restabfälle) aus Haushalten und Gewerbebetrieben ist die Hauptzerkleinerung in einer Semiautogenmühle (einer Autogenmühle, die mit Mahlkörpern betrieben wird). Vorteile der Hauptzerkleinerung des Restmülls in diesem Aggregat sind
- eine hohe Verfügbarkeit der Zerkleinerungsvorrichtung,
- ein hohes Zerkleinerungsverhältnis,
- ein guter Aufschluss des Restmülls durch Druck-, Schlag- und Druck-Scher-Beanspruchungen und
- die Erzielung einer gut belüftbaren Struktur des dabei erhaltenen Zerkleinerungsprodukts für eine nachfolgende biologische Behandlung.

Semiautogenmühlen zeichnen sich allgemein durch ein kleines Längen/Durchmesser (L/D)-Verhältnis aus (bei trocken arbeitenden Semiautogenmühlen beträgt dieses Verhältnis L/D < 1). Der große Durchmesser der Semiautogenmühlen sichert dabei die notwendige hohe Beanspruchungsenergie bei der Schlagbeanspruchung der zu behandelnden Restabfälle und die notwendige Beanspruchungshäufigkeit.

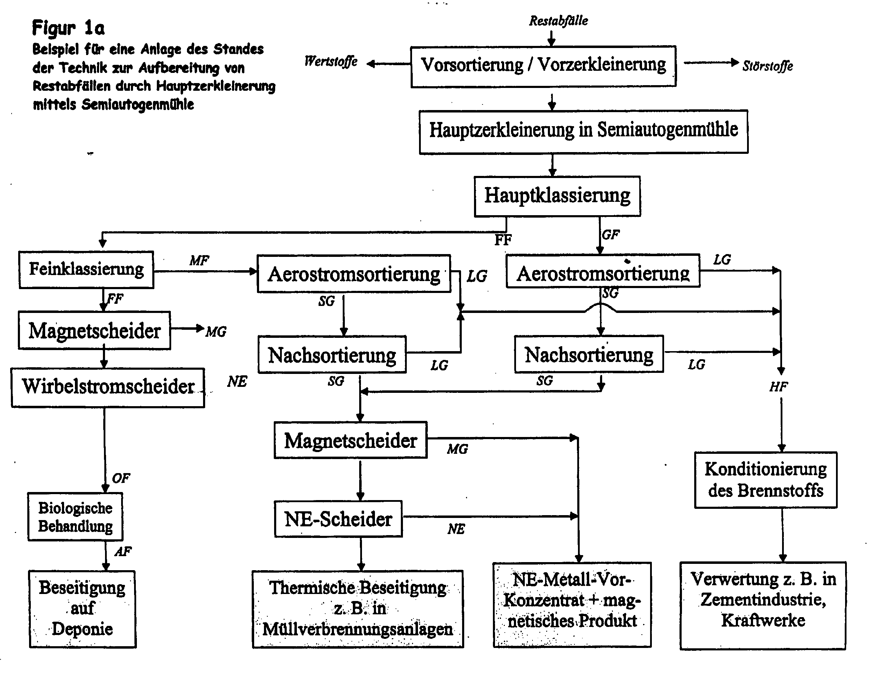

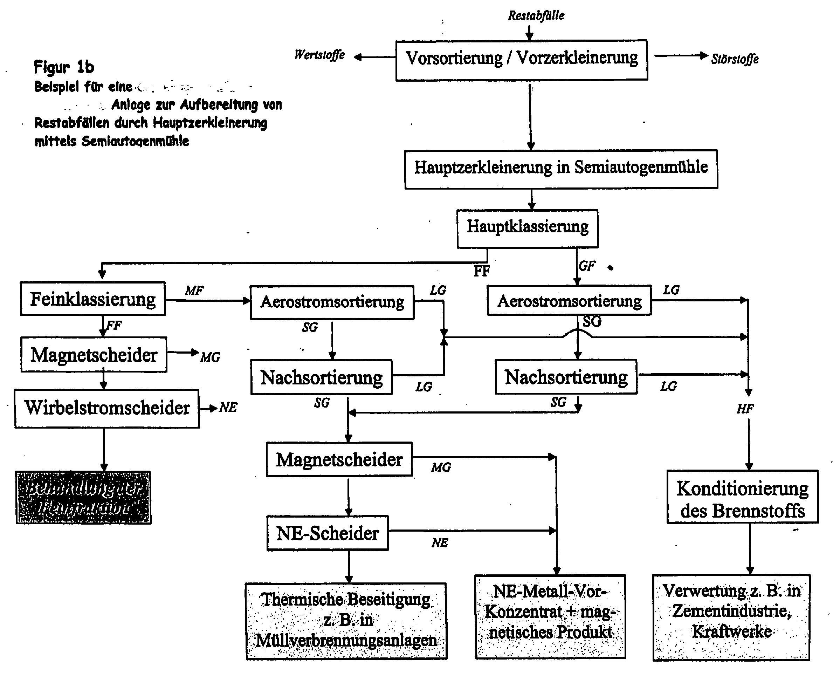

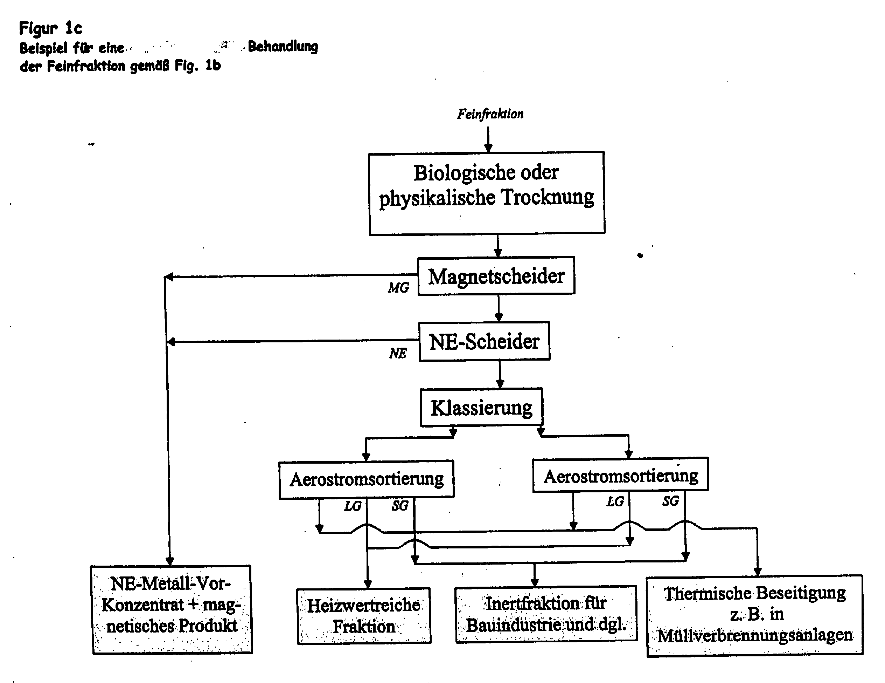

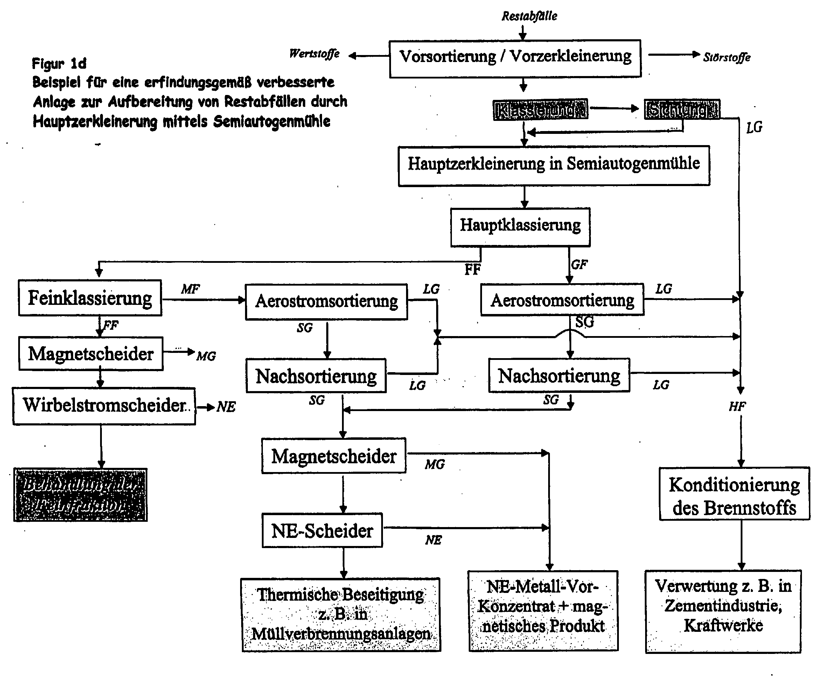

In Restmüll-Behandlungsanlagen dieses Typs werden unterschiedliche Kombinationen von Behandlungsstufen genutzt, von denen eine Ausführungsform mit Hauptzerkleinerung mittels Semiautogenmühle gemäß dem derzeitigen Stand der Technik in der beiliegenden Fig. 1 a schematisch dargestellt ist:
- Vorsortierung des Restmülls (der Restabfälle) mittels Bagger oder Radlader,
- Vorzerkleinerung, insbesondere von Sperrmüll und grobstückigem Gewerbeabfall, in einem Rotorreißer,
- Hauptzerkleinerung des gesamten Restmülls in einer Semiautogenmühle,
- mechanische Aufbereitung der Restabfälle durch Hauptklassierung mittels Trommelsieb, durch Feinklassierung mittels Spannwellensieb, durch Sortierung mittels Aerostromsortierung, Magnetscheidung, Wirbelstromscheidung, Nahe-Infrarot(NIR)-Sortierung und dgl.,
- Konditionierung des Ersatzbrennstoffs nach der mechanischen Aufbereitung durch Nachzerkleinerung, Trocknung und/oder Pelletierung,
- biologische Behandlung der organikreichen Feinfraktion aus der mechanischen Aufbereitung vor der Ablagerung auf Deponien, beispielsweise durch Rotten in Rottetunneln, Vollstromvergärung, Teilstromvergärung und dgl.

In den realisierten Anlagen können einzelne Behandlungsstufen fehlen, beispielsweise die Konditionierung des Brennstoffs, wenn sie für den zu verarbeitenden Abfall nicht erforderlich sind, oder die Reihenfolge der einzelnen Behandlungsstufen kann geändert werden. Die genannten Maschinen sind Beispiele.

In der Regel werden bei einer solchen Anlagenkonzeption ca. 30 bis 60 % des Restmülls (der Restabfälle) aus Haushalten und Gewerbebetrieben einer biologischen Behandlung unterzogen und anschließend deponiert.

Im Hinblick auf die Zielstellung, eine weitestgehende Reduzierung der zu deponierenden Mengen zu erreichen bzw. auf eine Deponierung vollständig zu verzichten, ist dieser derzeitige Zustand jedoch unbefriedigend. Der möglichst vollständigen Verwertung des Restmülls (der Restabfälle) durch Anlagen, in denen eine Hauptzerkleinerung mittels einer Semiautogenmühle durchgeführt wird, stehen im Wesentlichen zwei Hindernisse im Wege:
- eine schlechte Sortierbarkeit der erhaltenen Feinfraktion und
- ein Übermahlen, d.h. ein zu intensives Zerkleinern, von potentiellen Wertstoffen.

Sortierversuche haben gezeigt, dass sich durch eine Sortierung der Feinfraktion aus einer Semiautogenmühle (Teilchengröße 0 bis 3 mm) nur ungenügende Ersatz-Brennstoffqualitäten herstellen lassen. Dies ist auf die für eine trennscharfe Sortierung zu hohe Feuchte der Feinfraktion zurückzuführen.

Es wurde nun überraschend gefunden, dass bei dieser Ausführungsform die Verwertungsquote erfindungsgemäß wirksam erhöht werden kann durch Trocknung der Feinfraktion. Erfindungsgemäß kann diese Trocknung durch Nutzung der Abwärme der biologischen Abbauprozesse in der organikreichen Feinfraktion (beispielsweise durch biologische Trocknung in einer Tunnelrotte oder durch physikalische Trocknung in einem Kontakt- oder Konvektionstrockner) erfolgen.

Der Vorteil dieser Arbeitsweise besteht darin, dass lediglich ein Teilstrom des Aufgabegutes einer Trocknung unterzogen werden muss. Damit fallen im Vergleich zum bekannten Trockenstabilat-Verfahren, bei dem der gesamte Restmüll einer Trocknung unterzogen wird, weniger Investitions- und Betriebskosten an. Außerdem erweist sich die durch die besondere Hauptzerkleinerung, beispielsweise mittels einer Semiautogenmühle, erzielte feinkörnige Struktur des Feingutes und der gute Aufschluss der biologisch abbaubaren Komponenten als vorteilhaft für eine biologische Trocknung. Je nach Anteil der biologisch abbaubaren Bestandteile in der organikreichen Feinfraktion dauert daher in diesem Fall die biologische Trocknung nur wenige Tage und ist somit wesentlich kürzer als beispielsweise beim bekannten Trockenstabilat-Verfahren.

Die sich an die Trocknung anschließende Sortierung der organikreichen Feinfraktion, in der Regel in Verbindung mit vorgeschalteten Klassierprozessen, zur Abtrennung heizwertreicher Bestandteile wird beispielsweise durch
- Luftherde und/oder
- Hartstoffabscheider und/oder
- Sichter
realisiert. Vorab kann dabei je nach Metallgehalt der organikreichen Feinfraktion eine Abtrennung der Metalle, beispielsweise mittels Magnettrommeln, Wirbestromscheidern oder Elektrosortierern, erfolgen.

Die auf diese Weise abgetrennte heizwertreiche Fraktion kann zur Ersatzbrennstofffraktion, die aus der Grob- und Mittelfraktion gewonnen wurde, zugegeben werden. Die abgetrennte Schwerfraktion ist als Inertfraktion in der Bauindustrie beispielsweise als Zuschlagstoff einsetzbar. Falls dabei eine Mittelfraktion anfällt, kann diese entweder einer thermischen Entsorgung, beispielsweise einer Verbrennung in einer Müllverbrennungsanlage, zugeführt oder weiter biologisch behandelt werden. Nach der biologischen Behandlung ist dann die Ablagerung auf Deponien möglich. Alternativ kann auch die gegebenenfalls erhaltene Mittelfraktion einer Trocknung zugeführt werden, um entweder die Sortierbarkeit zu verbessern oder den unteren Heizwert zu erhöhen und die Zugabe der Mittelfraktion zu der heizwertreichen Fraktion zu ermöglichen.

Es wurde außerdem gefunden, dass eine Verwertung aller Inhaltsstoffe des Restmülls (der Restabfälle) dadurch erschwert wird, dass der Abfall in einer Semiautogenmühle zum Übermahlen neigt, d.h. zu intensiv zerkleinert wird.

Bei der Zerkleinerung der Restabfälle wurde nämlich festgestellt, dass durch die lange Verweilzeit großer Stücke des Aufgabegutes (z.B. Holz, Kunststofffolien) in einer Semiautogenmühle heizwertreiche Komponenten zu einem hohen Anteil in die organikreiche Feinfraktion gelangen und damit nach den bisherigen Anlagenkonzepten einer Verwertung als Ersatzbrennstoff nicht mehr zur Verfügung stehen. Die Ursache hierfür ist, dass zu große Stücke der heizwertreichen Komponenten des Aufgabegutes in die Autogenmühle gelangen.

Diesem Nachteil kann zwar durch eine weitergehende Vorzerkleinerung der Restabfälle abgeholfen werden, dies ist aus Sicht des Anlagenbetreibers jedoch nicht wirtschaftlich, da die Investitions- und Verschleißkosten zur Durchführung der weitergehenden Vorzerkleinerung und die Stillstandszeiten durch die weitergehende Vorzerkleinerung ansteigen.

Es wurde nun überraschend gefunden, dass dieses Problem erfindungsgemäß dadurch gelöst wird, dass - nach der Vorzerkleinerung und vor der Hauptzerkleinerung beispielsweise in einer Semiautogenmühle - die heizwertreichen Komponenten aussortiert und direkt der Ersatzbrennstoff-Konditionierung zugeführt werden. Dabei kann die Abtrennung der heizwertreichen Fraktion in der Regel in Verbindung mit vorgeschalteten Klassierprozessen beispielsweise durch folgende Sortierprozesse erfolgen, wie in Fig. 1d schematisch dargestellt:
a) Sichtung und/oder
b) NIR-Sortierung und/oder
c) händisches Auslesen.

Die auf diese Weise erhaltene heizwertreiche Fraktion kann entweder separat zu Ersatzbrennstoff aufbereitet werden (hoher Heizwert) oder gemeinsam mit der heizwertreichen Fraktion aus der Aufbereitung zu Ersatzbrennstoff verarbeitet werden.

Um die vorstehend angegebenen Vorteile der Beanspruchung der Restabfälle in einer Semiautogenmühle zu verbessern (insbesondere zur Erzielung eines hohen Zerkleinerungsverhältnisses und eines guten Aufschlusses des Restmülls) und um die vorgenannten Nachteile zu vermeiden (insbesondere die Übermahlung von heizwertreichen Komponenten), kann es für bestimmte Restabfälle sinnvoll sein, andere Sturzmühlen (Trommelmühlen mit Mahlkörpern) einzusetzen. Bei dem weiter unten beschriebenen erfindungsgemäßen Verfahren und in der dort ebenfalls beschriebenen erfindungsgemäßen Anlage zur Behandlung von Restmüll aus Haushalten und Gewerbebetrieben kann es für bestimmte Restabfälle sinnvoll sein, zur Verbesserung der Hauptzerkleinerung anstelle einer Semiautogenmühle eine Trommelmühle, insbesondere eine Kugelmühle, Stabmühle oder Schwingmühle mit auf die jeweils behandelten Restabfälle abgestimmten Mahlkörpern einzusetzen.

B. Bei einem anderen Typ der derzeit in Betrieb befindlichen Anlagen ohne Hauptzerkleinerung mittels Semiautogenmühle zur Behandlung von Restmüll (Restabfällen) aus Haushalten und Gewerbebetrieben werden die folgenden Behandlungen in unterschiedlichen Kombinationen eingesetzt:
- Vorsortierung, beispielsweise mittels Bagger oder Radlader,
- mechanische Aufbereitung der Restabfälle (des Restmülls) durch Zerkleinerung, Klassierung beispielsweise mittels Trommelsieb, Sortierung mittels Aerostromsortierung, Magnetscheidung, Wirbelstromscheidung, NIR-Sortierung und dgl.,
- Trocknung der Restabfälle vor der mechanischen Aufbereitung oder des Ersatzbrennstoffs nach der mechanischen Aufbereitung (physikalische Trocknung, beispielsweise in Trommeltrocknern, Trocknung unter Ausnutzung der Abwärme bei biologischen Abbauprozessen, beispielsweise in Rottetunneln oder Rotteboxen),
- biologische Behandlung der organikreichen Feinfraktion aus der mechanischen Aufbereitung vor der Ablagerung auf Deponien (beispielsweise durch Rotten in Rottetunneln, Vollstromvergärung, Teilstromvergärung und dgl.), und
- Konditionierung des Ersatzbrennstoffs, beispielsweise durch Nachzerkleinerung, Trocknung und Pelletierung.

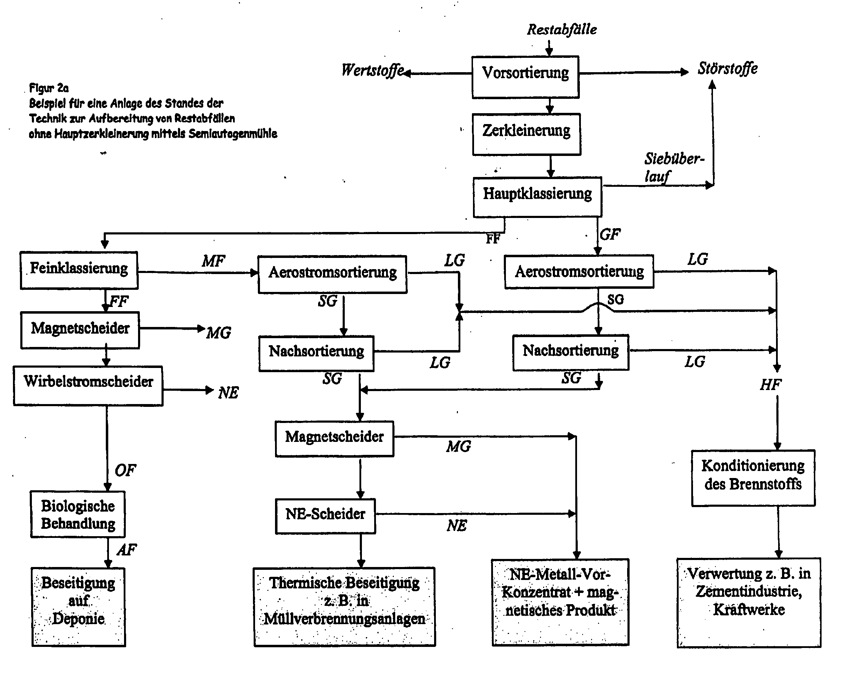

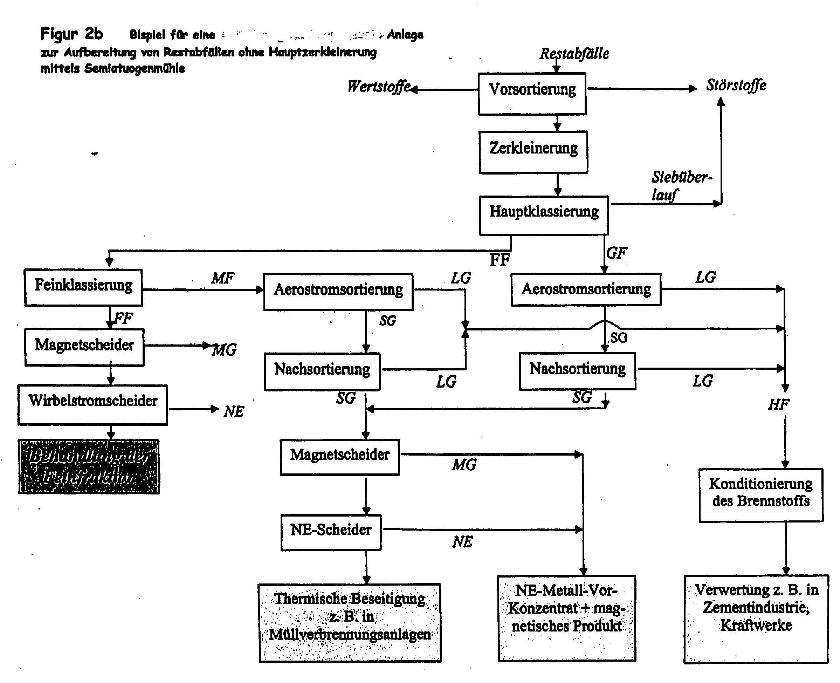

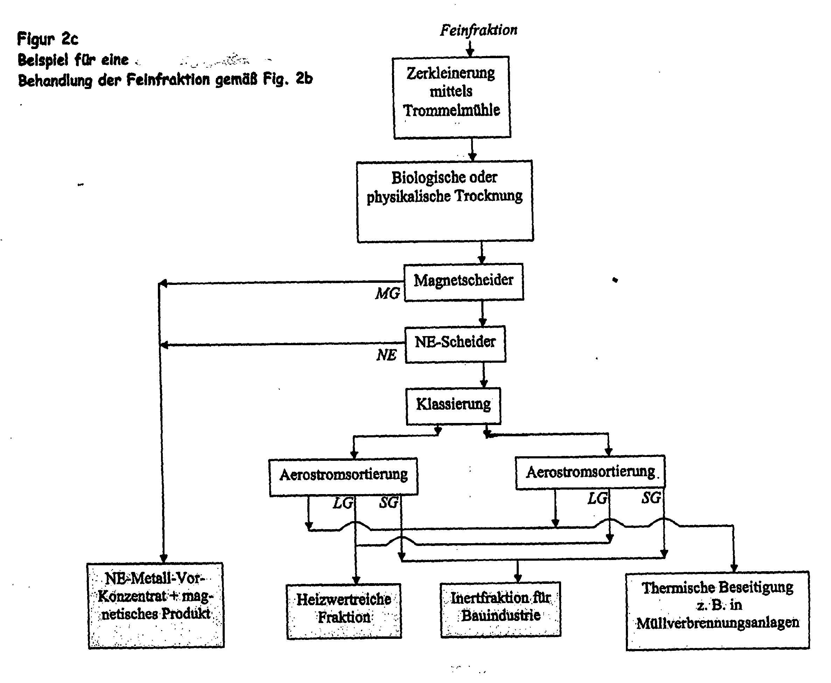

Typische Anlagen, die nach diesem Konzept arbeiten, sind beispielsweise nach dem folgenden Schema konzipiert, wie es in der in Fig. 2a der beiliegenden Zeichnungen dargestellten Ausführungsform ohne Hauptzerkleinerung mittels Semiautogenmühle schematisch dargestellt ist:
- Zerkleinerung der Restabfälle und Hauptklassierung beispielsweise mittels Trommelsieb,
- Absiebung der organikreichen Feinfraktion, beispielsweise mit einer Teilchengröße von < 50 oder < 60 mm,
- Metallabtrennung aus der organikreichen Feinfraktion,
- biologische Behandlung der organikreichen Feinfraktion zur Erreichung der Ablagerungskriterien und
- Aufbereitung der Mittel- und Grobfraktion zu Ersatzbrennstoff.

Auch hier können in den realisierten Anlagen einzelne Behandlungsstufen fehlen, beispielsweise die Zerkleinerung der Restabfälle, wenn sie für den zu verarbeitenden Abfall nicht erforderlich sind, oder die Reihenfolge der einzelnen Behandlungsstufen kann geändert werden.

Bei einer solchen Anlagenkonzeption werden in der Regel ca. 40 bis 60 % des Restmülls (der Restabfälle) einer biologischen Behandlung unterzogen und anschließend deponiert.

Im Hinblick auf die Zielstellung, eine weitestgehende Reduzierung der zu deponierenden Mengen zu erreichen bzw. eine Deponierung möglichst ganz zu vermeiden, ist dieser derzeitige Zustand jedoch ebenfalls unbefriedigend.

Es wurde nun gefunden, dass dieser Nachteil des vorstehend beschriebenen Anlagenkonzepts des Standes der Technik erfindungsgemäß dadurch überwunden werden kann, dass die organikreiche Feinfraktion aus der mechanischen Aufbereitung neben der bereits üblichen Metallabtrennung einer weiteren bzw. zusätzlichen Behandlung unterzogen wird, um den Anteil der zu deponierenden Restabfälle zu verringern oder ganz auf eine Deponierung zu verzichten.

Diese erfindungsgemäße zusätzliche Behandlung der organikreichen Feinfraktion ist durch eine intensive Zerkleinerung der Feinfraktion gekennzeichnet. Die zusätzliche Behandlung kann in den nachstehend angegebenen Schritten a und b und eventuell bestehen.
a) einer intensiven Zerkleinerung in einer Trommelmühle, vorzugsweise einer Kugel-, Stab- oder Schwingmühle,
b) einer Trocknung der organikreichen Feinfraktion,
c) einer Sortierung der getrockneten organikreichen Feinfraktion.

Die Feinzerkleinerung der organikreichen Feinfraktion erfolgt mit dem Ziel,
- eine engere Stückgrößenverteilung zu erzielen, die für eine anschließende Sortierung erforderlich ist,
- die Zugänglichkeit der biologisch abbaubaren Bestandteile in der organikreichen Feinfraktion zu verbessern (z.B. zur Erzielung einer besseren Belüftbarkeit) und
- den Aufschluss der biologisch abbaubaren Bestandteile in der organikreichen Feinfraktion zu verbessern.

Durch die Trocknung der organikreichen Feinfraktion wird die Sortierbarkeit der Feinfraktion verbessert. Dabei können im Rahmen einer physikalischen Trocknung beispielsweise Kontakttrockner, Konvektionstrockner und dgl. eingesetzt werden. Je nach Gehalt an biologisch abbaubaren Bestandteilen in der organikreichen Feinfraktion ist auch eine Trocknung unter Ausnutzung der Abwärme bei biologischen Abbauprozessen möglich. Beispielsweise kann die Trocknung durch eine aerobe biologische Behandlung in Rottetunneln erfolgen. Dabei wirkt sich die vorangegangene zusätzliche Zerkleinerung positiv auf die biologischen Abbauvorgänge aus und verbessert damit den Trocknungsprozess ganz entscheidend.

Die abschließende mechanische Sortierung dient der Abtrennung weiterer Wertstoffe. So können beispielsweise weitere Metalle, beispielsweise durch Magnettrommeln, Elektrosortierung oder Wirbelstromabscheidung, abgetrennt werden.

Heizwertreiche Bestandteile können beispielsweise durch Luftherde, Hartstoffabscheider und/oder Sichter im Leichtgut gewonnen werden. Im Schwergut können mineralische Bestandteile abgetrennt werden, die in der Bauindustrie eingesetzt werden können. Gegebenenfalls sammeln sich im Mittelgut Schadstoffe an, die einer thermischen Beseitigung, beispielsweise in einer Müllverbrennungsanlage, zugeführt werden müssen.

Enthält die Feinfraktion nur einen geringen Anteil an Wertstoffen, kann sich die Behandlung der Feinfraktion nach der Zerkleinerung auf eine biologische Behandlung zur Einhaltung der Ablagerungsgrenzwerte für die Deponie beschränken.

Gegenstand der vorliegenden Erfindung ist daher gemäß einem ersten Aspekt ein Verfahren zur Behandlung von Restmüll (Restabfällen) aus Haushalten und Gewerbebetrieben in Behandlungsanlagen mit mechanischer und/oder biologischer Aufbereitung, gemäß den Merkmalen des Anspruchs 1.

Bevorzugte Ausgestaltungen des vorstehend beschriebenen erfindungsgemäßen Verfahrens sind, einzeln oder in Kombination, dadurch gekennzeichnet, dass
die Vorzerkleinerung des Restmülls, insbesondere von Sperrmüll und grobstückigem Gewerbeabfall, in einem Rotorreißer durchgeführt wird;
die Hauptzerkleinerung des Restmülls in einer Semiautogenmühle oder einer Trommelmühle, vorzugsweise in einer Kugelmühle, Stabmühle oder Schwingmühle, durchgeführt wird;
die mechanische Aufbereitung des Restmülls durch Hauptklassierung mittels Trommelsieb und durch Feinklassierung mittels Spannwellensieb, durch Sortieren mittels Aerostromsortierung, Magnetscheidung, Wirbelstromscheidung oder Nah-Infrarot (NIR)-Sortieren durchgeführt wird;
der Ersatzbrennstoff nach der mechanischen Aufbereitung durch Nachzerkleinerung, Trocknung und/oder Pelletierung konditioniert wird;
die mechanische Behandlung der organikreichen Feinfraktion in einem Magnetscheider und/oder in einem Wirbelstromscheider durchgeführt wird;
die organikreiche Feinfraktion vor der Ablagerung auf einer Deponie einer biologischen Behandlung durch Rotten in Rottetunneln, einer Vollstromvergärung oder einer Teilstromvergärung unterworfen wird;
die Feinfraktion nach der Feinzerkleinerung getrocknet wird durch Ausnutzung der Abwärme der biologischen Abbauprozesse in der organikreichen Feinfraktion (z.B. biologische Trocknung in einer Tunnelrotte) und/oder durch physikalische Trocknung in einem Kontakt- oder Konvektionstrockner;
die Feinzerkleinerung der organikreichen Feinfraktion in einer Trommelmühle, vorzugsweise in einer Kugel-, Stab- oder Schwingmühle, durchgeführt wird;
die Mittelfraktion aus der Sortierung der Feinfraktion getrocknet wird;
die Behandlung der organikreichen Feinfraktion aus den nachstehend angegebenen Schritten a und b und/oder c besteht:
a) intensive Zerkleinerung in einer Trommelmühle,
b) Trocknung,
c) Sortierung der getrockneten Feinfraktion; und/oder
die Abtrennung der heizwertreichen Fraktion erfolgt durch
a) Sichten und/oder
b) NIR-Sortieren und/oder
c) händisches Auslesen.

Gemäß einem weiteren Aspekt betrifft die vorliegende Erfindung eine Anlage zur Behandlung von Restmüll bzw. Restabfällen aus Haushalten und Gewerbebetrieben mit mechanischer und/oder biologischer Aufbereitung, insbesondere zur Durchführung des vorstehend beschriebenenen erfindungsgemäßen Verfahrens gemäß den Merkmalen des Anspruchs 14.

Gemäß bevorzugten Ausgestaltungen der erfindungsgemäßen Anlage handelt es sich, einzeln oder in Kombination,
bei der Einrichtung zur Vorzerkleinerung des Restmülls, insbesondere von Sperrmüll und grobstückigem Gewerbeabfall, um einen Rotorreißer;
bei der Einrichtung zur Hauptzerkleinerung des Restmülls um eine Semiautogenmühle oder eine Trommelmühle, vorzugsweise um eine Kugel-, Stab- oder Schwingmühle;
bei der Einrichtung zur mechanischen Aufbereitung des Restmülls durch Klassieren um ein Trommelsieb zur Hauptklassierung und um ein Spannwellensieb zur Feinklassierung oder um eine Einrichtung zur Aerostromsortierung, Magnetscheidung, Wirbelstromscheidung oder Nah-Infrarot(NIR)-Sortierung;
bei der Einrichtung zur mechanischen Behandlung der organikreichen Feinfraktion um einem Magnetscheider und/oder Wirbelstromscheider;
bei der Einrichtung zur biologischen Behandlung der organikreichen Feinfraktion durch Rotten um einen Rottetunnel, eine Vollstromvergärungs- oder Teilstromvergärungseinrichtung;
bei der Einrichtung zur Trocknung der organikreichen Feinfraktion um einen Kontakt- oder Konvektionstrockner; und/oder
bei der Einrichtung zur Feinzerkleinerung der organikreichen Feinfraktion um eine Trommelmühle, vorzugsweise um eine Kugel-, Stab- oder Schwingmühle.

Beispielhafte Ausführungsformen des Verfahrens und der Anlage zur Behandlung von Restmüll (Restabfällen) aus Haushalten und Gewebebetrieben in Behandlungsanlagen mit mechanischer und/oder biologischer Aufbereitung gemäß dem derzeitigen Stand der Technik sowie einer technisch verbesserten Ausführungsform gemäß der vorliegenden Erfindung (Fig. 1 d) sind in den beiliegenden Zeichnungen schematisch dargestellt, wobei zeigen:
- Fig. 1a: ein Beispiel für eine erste Ausführungsform eines Verfahrens bzw. einer Anlage des Standes der Technik zur Aufbereitung von Restabfällen durch Hauptzerkleinerung mittels einer Semiautogenmühle;
- Fig. 1b: ein illustratives Beispiel für ein(e) Verfahren bzw. Anlage zur Aufbereitung von Restabfällen durch Hauptzerkleinerung mittels einer Semiautogenmühle;
- Fig. 1c: ein Beispiel für eine Behandlung der organikreichen Feinfraktion gemäß Fig. 1 b;
- Fig. 1d: ein Beispiel für ein(e) erfindungsgemäß verbesserte(s) Verfahren bzw Anlage zur Aufbereitung von Restabfällen mit Hauptzerkleinerung mittels Semiautogenmühle;
- Fig. 2a: ein Beispiel für eine andere Ausführungsform eines Verfahrens bzw. einer Anlage gemäß dem derzeitigen Stand der Technik zur Aufbereitung von Restabfällen ohne Hauptzerkleinerung mittels Semiautogenmühle;
- Fig. 2b: ein illustratives Beispiel für ein(e) Verfahren bzw. Anlage zur Aufbereitung von Restabfällen ohne Hauptzerkleinerung mittels Semiautogenmühle; und
- Fig. 2c: ein Beispiel für eine Behandlung der organikreichen Feinfraktion gemäß Fig. 2 b.

Die in den beiliegenden Zeichnungen verwendeten Abkürzungen haben die folgenden Bedeutungen:

| | |
|---|---|
| SG: Schwergut | GF: Grobfraktion |
| LG: Leichtgut | FF: Feinfraktion |
| MG: magnetische Stoffe | MF: Mittelfraktion |
| NE: Nichteisen-Metalle | OF: organikreiche Feinfraktion |
| AF: Fraktion zur Ablagerung | HF: heizwertreiche Fraktion |

## Patentansprüche

1. Verfahren zur Behandlung von Restmüll aus Haushalten und Gewerbebetrieben in Behandlungsanlagen mit mechanischer und biologischer Aufbereitung, das die folgenden Stufen umfasst:
a) Vorsortierung des Restmülls zur Abtrennung von Störstofffraktionen und Wertstofffraktionen,
b) mechanische Aufbereitung des vorsortierten Restmülls durch Vorzerkleinern und Hauptklassieren zur Auftrennung in eine Feinfraktion und in eine Grobfraktion,
c) Auftrennung der Grobfraktion
einerseits in Schwergut, das weiterverarbeitet wird zu Nichteisenmetall (NE)-Vorkonzentrat und magnetischem Produkt, und
andererseits in eine heizwertreiche Fraktion, die zu Ersatzbrennstoffen weiterverarbeitet wird, sowie
d) Auftrennung der Feinfraktion durch Feinklassieren
einerseits in eine Mittelfraktion, die durch mechanische Aufarbeitung zu einer Fraktion verarbeitet wird, die thermisch beseitigt oder zu Ersatzbrennstoffen verarbeitet wird, und
andererseits in eine organikreiche Feinfraktion, die nach mechanischer Behandlung einer biologischen Behandlung unterworfen und anschließend auf einer Deponie abgelagert wird,
**dadurch gekennzeichnet, dass**
α) aus dem vorsortierten und vorzerkleinerten Restmüll eine heizwertreiche Fraktion abgetrennt und zu Ersatzbrennstoffen weiterverarbeitet wird, und
β) die nach der Hauptklassierung und Feinklassierung erhaltene organikreiche Fraktion in einer Semiautogenmühle oder Trommelmühle intensiv feingemahlen wird und die dabei erhaltene Feinfraktion getrocknet und danach einer biologischen Behandlung unterworfen und auf einer Deponie abgelagert wird.

2. Verfahren nach Anspruch 1, **dadurch gekennzeichnet, dass** die Vorzerkleinerung des Restmülls, insbesondere von Sperrmüll und grobstückigem Gewerbeabfall, in einem Rotorreißer durchgeführt wird.

3. Verfahren nach Anspruch 1 oder 2, **dadurch gekennzeichnet, dass** die Zerkleinerung der organikreiche Fraktion in einer Kugelmühle, Stabmühle oder Schwingmühle durchgeführt wird.

4. Verfahren nach den Ansprüchen 1 bis 3, **dadurch gekennzeichnet, dass** die mechanische Aufbereitung des Restmülls durch Hauptklassieren mittels eines Trommelsiebs, durch Feinklassieren mittels eines Spannwellensieb, durch Sortieren mittels Aerostromsortierung, Magnetscheidung, Wirbelstromscheidung oder Nah-Infrarot (NIR)-Sortieren durchgeführt wird.

5. Verfahren nach den Ansprüchen 1 bis 4, **dadurch gekennzeichnet, dass** die Ersatz-Brennstofffraktion nach der mechanischen Aufbereitung getrocknet wird.

6. Verfahren nach den Ansprüchen 1 bis 5, **dadurch gekennzeichnet, dass** die Ersatz-Brennstofffraktion durch Nachzerkleinerung, Trocknung und Pelletierung konditioniert wird.

7. Verfahren nach den Ansprüchen 1 bis 5, **dadurch gekennzeichnet, dass** die mechanische Behandlung der organikreichen Feinfraktion in einem Magnetscheider oder in einem Wirbelstromscheider durchgeführt wird.

8. Verfahren nach den Ansprüchen 1 bis 7, **dadurch gekennzeichnet, dass** die organikreiche Feinfraktion vor der Ablagerung auf einer Deponie einer biologischen Behandlung durch Rotten in Rottetunneln, einer Vollstromvergärung oder einer Teilstromvergärung unterworfen wird.

9. Verfahren nach den Ansprüchen 1 bis 8, **dadurch gekennzeichnet, dass** die organikreiche Feinfraktion nach der intensiven Feinzerkleinerung getrocknet wird durch Ausnutzung der Abwärme der biologischen Abbauprozesse in der organikreichen Feinfraktion in einer Tunnelrotte als biologische Trocknung oder in einem Kontakt- oder Konvektionstrockner als physikalische Trocknung.

10. Verfahren nach den Ansprüchen 1 bis 9, **dadurch gekennzeichnet, dass** die organikreiche Feinfraktion vor oder nach der biologischen Behandlung einer Sortierung unterworfen wird.

11. Verfahren nach den Ansprüchen 1 bis 10, **dadurch gekennzeichnet, dass** die Mittelfraktion aus der Sortierung der organikreichen Feinfraktion getrocknet wird.

12. Verfahren nach den Ansprüchen 1 bis 11, **dadurch gekennzeichnet, dass** die Behandlung der organikreichen Fraktion aus den nachstehend angegebenen Schritten besteht:
a) intensive Zerkleinerung in einer Trommelmühle, vorzugsweise in einer Kugelmühle, Stabmühle oder Schwingmühle,
b) Trocknung und
c) Sortierung der getrockneten Feinfraktion.

13. Verfahren nach den Ansprüchen 1 bis 12, **dadurch gekennzeichnet, dass** die Abtrennung der heizwertreichen Fraktion erfolgt durch
a) Sichten
b) Nahes Infrarot(NIR)-Sortieren oder
c) händisches Auslesen.

14. Anlage zur Behandlung von Restmüll aus Haushalten und Gewerbebetrieben mit mechanischer und biologischer Aufbereitung, insbesondere zur Durchführung des Verfahrens nach einem der Ansprüche 1 bis 13, die umfasst:
a) Einrichtungen zur Vorsortierung des Restmülls, zur Abtrennung von Störstofffraktionen und Wertstofffraktionen,
b) Einrichtungen zur mechanischen Aufbereitung des vorsortierten Restmülls durch Vorzerkleinern und Hauptklassieren zur Auftrennung in eine Feinfraktion und in eine Grobfraktion,
c) Einrichtungen zur Auftrennung der Grobfraktion einerseits in Schwergut, das weiterverarbeitet wird zu Nichteisenmetall (NE)-Vorkonzentrat und magnetischem Produkt, und
andererseits in eine heizwertreiche Fraktion, die zu Ersatzbrennstoffen weiterverarbeitet wird, sowie
d) Einrichtungen zur Auftrennung der Feinfraktion durch Feinklassieren einerseits in eine Mittelfraktion, die durch mechanische Aufarbeitung zu einer Fraktion verarbeitet wird, die thermisch beseitigt oder zu Ersatzbrennstoffen verarbeitet wird, und
andererseits in eine organikreiche Feinfraktion, die nach mechanischer Behandlung einer biologischen Behandlung unterworfen und anschließend auf einer Deponie abgelagert wird,
**gekennzeichnet durch**
α) Einrichtungen, mit deren Hilfe aus dem vorsortierten und vorzerkleinerten Restmüll eine heizwertreiche Fraktion abgetrennt und zu Ersatzbrennstoffen weiterverarbeitet wird, und
β) eine Semiautogenmühle oder eine Trommelmühle, mit deren Hilfe nach der Hauptklassierung und Feinklassierung die erhaltene organikreiche Fraktion, intensiv feingemahlen wird,
Einrichtungen zum Trocknen der erhaltenen Feinfraktion und
Einrichtungen zur biologischen Behandlung der getrockneten Feinfraktion.

15. Anlage nach Anspruch 14, **dadurch gekennzeichnet, dass** es sich bei der Einrichtung zur Vorzerkleinerung des Restmülls, insbesondere von Sperrmüll und grobstückigem Gewerbeabfall, um einen Rotorreißer handelt.

16. Anlage nach Anspruch 14 und/oder 15, **dadurch gekennzeichnet, dass** es sich bei der Einrichtung zur Zerkleinerung der organikreichen Fraktion um eine Kugel-, Stab- oder Schwingmühle handelt.

17. Anlage nach einem der Ansprüche 14 bis 16, **dadurch gekennzeichnet, dass** es sich bei der Einrichtung zur mechanischen Aufbereitung des Restmülls durch Klassieren um ein Trommelsieb zur Hauptklassierung und um ein Spannwellensieb zur Feinklassierung oder um eine Einrichtung zur Aerostromsortierung, Magnetscheidung, Wirbelstromscheidung oder Nah-Infrarot (NIR)-Sortierung handelt.

18. Anlage nach einem der Ansprüche 14 bis 17, **dadurch gekennzeichnet, dass** es sich bei der Einrichtung zur mechanischen Behandlung der organikreichen Feinfraktion um einen Magnetscheider oder Wirbelstromscheider handelt.

19. Anlage nach einem der Ansprüche 14 bis 18, **dadurch gekennzeichnet, dass** es sich bei der Einrichtung zur biologischen Behandlung der organikreichen Feinfraktion um einen Rottetunnel, eine Vollstromvergärungs- oder eine Teilstromvergärungs-Einrichtung handelt.

20. Anlage nach einem der Ansprüche 14 bis 19, **dadurch gekennzeichnet, dass** es sich bei der Einrichtung zur Trocknung der organikreichen Fraktion um einen Kontakt- oder Konvektionstrockner handelt.

## Claims

1. Method for treating household and commercial residual waste in treatment plants including mechanical and biological preparation, comprising the following stages:
a) presorting the residual waste to separate non-recyclable material fractions from recyclable material fractions
b) mechanical preparation of presorted residual waste by pre-comminution and main classifying to separate a fine fraction from a coarse fraction
c) coarse fraction separation,
on the one hand, into heavies for further processing into non-ferrous metal preconcentrate and magnetic product, and,
on the other hand, into a high-calorific fraction for further processing into substitute fuels; as well as
d) fine fraction separation by fine classifying,
on the one hand, into a middle fraction processed by mechanical reconditioning into a fraction which is thermally eliminated or further processed into substitute fuels, and,
on the other hand, into an organic-rich fine fraction which after mechanical treatment is subjected to biological treatment and subsquently landfilled,
**characterized in that**
α) from the presorted and pre-comminuted residual waste a high-calorific fraction is separated and further processed into substitute fuels, and
β) the organic-rich fine fraction obtained from main classifying and fine classifying is intensively pulverized in a semi-autogenous mill or drum mill and the resulting fine fraction is dried, after which it is subjected to a biological treatment and landfilled.

2. The method as set forth in claim 1, **characterized in that** pre-comminution of the residual waste, particularly bulky waste and coarse commercial waste is implemented in a rotary shredder.

3. The method as set forth in claim 1 or 2, **characterized in that** comminution of the organic-rich fine fraction is implemented in a ball mill, rod mill or vibratory mill.

4. The method as set forth in any of the claims 1 to 3, **characterized in that** mechanical preparation of the residual waste by main classifying is implemented by means of a drum screen, by fine classifying by means of a flip-flow screen, by sorting by means of aeroflow sorting, magnetic separation, cyclone separation or near-infrared (NIR) sorting.

5. The method as set forth in any of the claims 1 to 4, **characterized in that** the substitute fuel fraction is dried after mechanical preparation.

6. The method as set forth in any of the claims 1 to 5, **characterized in that** the substitute fuel fraction is conditioned by recomminution, drying and pelletizing.

7. The method as set forth in any of the claims 1 to 5, **characterized in that** the mechanical treatment of the organic-rich fine fraction is implemented in a magnetic separator or in a cyclonic separator.

8. The method as set forth in any of the claims 1 to 7, **characterized in that** the organic-rich fine fraction before being landfilled is subjected to a biological preparation by rotting in rotting tunnels, full-flow digestion or fermentation or partial-flow digestion or fermentation.

9. The method as set forth in any of the claims 1 to 8, **characterized in that** the organic-rich fine fraction after intensive fine comminution is dried by exploiting the heat given off the biological digestion process in the organic-rich fine fraction in a tunnel rotter as biological drying or in a contact or convection dryer as physical drying.

10. The method as set forth in any of the claims 1 to 9, **characterized in that** the organic-rich fine fraction is subjected to sorting before or after the biological treatment.

11. The method as set forth in any of the claims 1 to 10, **characterized in that** the middle fraction from sorting the organic-rich fine fraction is dried.

12. The method as set forth in any of the claims 1 to 11, **characterized in that** the treatment of the organic-rich fine fraction comprises the following steps:
a) intensive comminution in a drum mill, preferably in a ball mill, rod mill or vibratory mill,
b) drying and
c) sorting the dried fine fraction.

13. The method as set forth in any of the claims 1 to 12, **characterized in that** separating the high-calorific fraction is done by
a) classifying
b) near-infrared (NIR) sorting or
c) hand picking.

14. Plant for treating domestic and commercial residual waste including mechanical and biological preparation, particularly for implementing the method as set forth in any of the claims 1 to 13, comprising:
a) means for presorting the residual waste to separate non-recyclable material fractions from recyclable fractions
b) means for mechanical preparation of presorted residual waste by pre-comminution and main classifying to separate a fine fraction and a coarse fraction
c) means for coarse fraction separation
on the one hand, into heavies for further processing into non-ferrous metal preconcentrate and magnetic product, and,
on the other hand, into a high-calorific fraction for further processing into substitute fuels, as well as
d) means for fine fraction separation by fine classifying on the one hand, into a middle fraction processed by mechanical reconditioning into a fraction which is thermally eliminated or further processed into substitute fuels, and,
on the other, into an organic-rich fine fraction which after mechanical treatment is subjected to biological treatment and subsquently landfilled,
**characterized by**
α) means with the aid of which from the presorted and precomminuted residual waste a high-calorific fraction is separated and further processed into substitute fuels, and
β) a semi-autogenous mill or drum mill, with the aid of which the organic-rich fine fraction obtained from main classifying and fine classifying is intensively pulverized,
means for drying the resulting fine fraction and
means for biological treatment of the dried fine fraction.

15. The plant as set forth in claim 14, **characterized in that** the means for precomminution of the residual waste, particularly bulky waste and coarse commercial waste involve a rotary shredder.

16. The plant as set forth in claim 14 and/or 15, **characterized in that** the means for comminuting the organic-rich fine fraction involve a ball mill, rod mill or vibratory mill.

17. The plant as set forth in any of the claims 14 to 16, **characterized in that** the means for mechanical preparation of the residual waste involve a drum screen for main classifying, and a flip-flow screen for fine classifying, or a means for aeroflow sorting, magnetic separation, cyclone separation or near-infrared (NIR) sorting.

18. The plant as set forth in any of the claims 14 to 17, **characterized in that** the means for mechanical treatment of the organic-rich fine fraction involve a magnetic separator or a cyclone separator.

19. The plant as set forth in any of the claims 14 to 18, **characterized in that** the means for biological treatment of the organic-rich fine fraction involve a rotting tunnel, full-flow digester or partial-flow digester.

20. The plant as set forth in any of the claims 14 to 19, **characterized in that** the means for drying the organic-rich fraction involve a contact- or convection dryer.

## Revendications

1. Procédé pour le traitement d'ordures résiduelles d'origine ménagère et d'exploitations industrielles dans des installations de traitement du type à traitement mécanique et biologique, qui comprend les étapes suivantes consistant à :
a) soumettre les ordures résiduelles à un triage préalable pour la séparation des fractions d'impuretés et des fractions de matériaux valorisables ;
b) soumettre à un traitement mécanique les ordures résiduelles prétriées via un concassage préalable et un classement principal afin de les séparer en une fraction fine et fraction grossière ;
c) séparer la fraction grossière,
d'une part en matières lourdes qui sont soumises à un traitement ultérieur pour obtenir un préconcentrat de métaux non-ferreux et un produit magnétique, et
d'autre part en une fraction à un pouvoir calorifique, qui est soumis à un traitement ultérieur pour obtenir des combustibles de substitution ; et
d) séparer la fraction fine via un classement fin
d'une part en une fraction médiane qui est soumise à un traitement mécanique pour obtenir une fraction qui est éliminée par voie thermique ou qui est soumis à un traitement pour obtenir des combustibles de substitution ; et
d'autre part en une fraction fine riche en produits organiques, qui est soumise, après un traitement mécanique, à un traitement biologique, avant d'être déposée sur une décharge ;
**caractérisé en ce que**
α) à partir des déchets résiduels qui ont été soumis à un triage préalable et à un concassage préalable, on sépare une fraction riche en pouvoir calorifique et on la soumet à un traitement ultérieur pour obtenir des combustibles de substitution ; et
β) la fraction riche en produits organiques que l'on obtient après le classement principal et le classement fin est soumise à un broyage fin intense dans un broyeur semi-autogène ou dans un broyeur à tambour, la fraction fine que l'on obtient en l'occurrence est séchée, avant de le soumettre à un traitement biologique et de la déposer sur une décharge.

2. Procédé selon la revendication 1, **caractérisé en ce que** le concassage préalable des déchets résiduels, en particulier des ordures encombrantes et des déchets industriels en gros morceaux, est réalisé dans une déchiqueteuse à rotor.

3. Procédé selon la revendication 1 ou 2, **caractérisé en ce que** le concassage de la fraction riche en produits organiques est réalisé dans un broyeur à boulets, dans un broyeur à barres ou dans un broyeur vibrant.

4. Procédé selon les revendications 1 à 3, **caractérisé en ce que** le traitement mécanique des déchets résiduels a lieu par classement principal au moyen d'un tamis à tambour, par classement fin au moyen d'un tamis à arbres expansibles, par triage au moyen d'un triage par courant aérien, d'un triage magnétique, d'un triage par courant tourbillonnaire ou encore d'un triage par analyse infrarouge proche (NIR).

5. Procédé selon les revendications 1 à 4, **caractérisé en ce que** la fraction de combustible de substitution est séchée après le traitement mécanique.

6. Procédé selon les revendications 1 à 5, **caractérisé en ce que** la fraction de combustible de substitution est soumise à un conditionnement après un concassage ultérieur, un séchage et une transformation en granulés.

7. Procédé selon les revendications 1 à 5, **caractérisé en ce que** le traitement mécanique de la fraction fine riche en produits organiques a lieu dans un séparateur magnétique ou dans un séparateur à courant tourbillonnaire.

8. Procédé selon les revendications 1 à 7, **caractérisé en ce que** la fraction fine riche en produits organiques, avant son dépôt sur une décharge, est soumise à un traitement biologique par pourrissage dans des tunnels utilisés à cet effet, à une fermentation à plein régime ou à une fermentation à courant partiel.

9. Procédé selon les revendications 1 à 8, **caractérisé en ce que** la fraction fine riche en produits organiques est séchée après le concassage fin intense par l'utilisation de la chaleur perdue des processus de dégradation biologique dans la fraction fine riche en produits organiques dans un pourrissage en tunnel, sous la forme d'un séchage biologique, ou bien dans un sécheur par contact ou par convection, sous la forme d'un séchage physique.

10. Procédé selon les revendications 1 à 9, **caractérisé en ce que** la fraction fine riche en produits organiques est soumise à un triage avant ou après le traitement biologique.

11. Procédé selon les revendications 1 à 10, **caractérisé en ce que** la fraction moyenne provenant du triage de la fraction fine riche en produits organiques est séchée.

12. Procédé selon les revendications 1 à 11, **caractérisé en ce que** le traitement de la fraction riche en produits organiques est constitué par les étapes indiquées ci-après consistant à :
a) procéder à un concassage intense dans un broyeur à tambour, de préférence dans un broyeur à boulets, dans un broyeur à barres ou dans un broyeur vibrant ;
b) sécher ; et
c) trier la fraction fine séchée.

13. Procédé selon les revendications 1 à 12, **caractérisé en ce que** la séparation de la fraction riche en pouvoir calorifique a lieu par :
a) tamisage ;
b) triage par analyse dans l'infrarouge proche (NIR) ; ou par
c) lecture à l'oeil nu.

14. Installation pour le traitement de déchets résiduels d'origine ménagère et d'exploitations industrielles comprenant un traitement mécanique et un traitement biologique, en particulier pour la mise en oeuvre du procédé selon l'une quelconque des revendications 1 à 13, qui comprend :
a) des mécanismes pour le triage préalable des déchets résiduels afin de séparer des fractions d'impuretés et des fractions de matériaux valorisables ;
b) des mécanismes pour soumettre à un traitement mécanique les ordures résiduelles prétriées via un concassage préalable et un classement principal afin de les séparer en une fraction fine et en une fraction grossière ;
c) des mécanismes pour séparer la fraction grossière,
d'une part en matières lourdes qui sont soumises à un traitement ultérieur pour obtenir un préconcentrat de métaux non-ferreux, et un produit magnétique, et
d'autre part en une fraction à un pouvoir calorifique, qui est soumis à un traitement ultérieur pour obtenir des combustibles de substitution ; et
d) des mécanismes pour séparer la fraction fine via un classement fin
d'une part en une fraction médiane qui est soumise à un traitement mécanique pour obtenir une fraction qui est éliminée par voie thermique ou qui est soumise à un traitement pour obtenir des combustibles de substitution ; et
d'autre part en une fraction fine riche en produits organiques, qui est soumise, après un traitement mécanique, à un traitement biologique, avant d'être déposée sur une décharge ;
**caractérisé en ce que**
α) des mécanismes, à l'aide desquels à partir des déchets résiduels qui ont été soumis à un triage préalable et à un concassage préalable, on sépare une fraction riche en pouvoir calorifique et on la soumet à un traitement ultérieur pour obtenir des combustibles de substitution ; et
β) un broyeur semi-autogène ou un broyeur à tambour, à l'aide desquels, après le classement principal et le classement fin, on soumet la fraction riche en produits organiques à un broyage fin intense
des mécanismes pour le séchage de la fraction fine obtenue ; et
des mécanismes pour le traitement biologique de la fraction fine séchée.

15. Installation selon la revendication 14, **caractérisée en ce que**, en ce qui concerne le mécanisme pour le concassage préalable des déchets résiduels, en particulier des ordures encombrantes et des déchets industriels en gros morceaux, il s'agit d'une déchiqueteuse à rotor.

16. Installation selon les revendications 14 et/ou 15, **caractérisée en ce que**, en ce qui concerne le mécanisme pour le concassage de la fraction riche en produits organiques, il s'agit d'un broyeur à boulets, d'un broyeur à barres ou du broyeur vibrant.

17. Installation selon l'une quelconque des revendications 14 à 16, **caractérisée en ce que**, en ce qui concerne le mécanisme pour le traitement mécanique des déchets résiduels par classement, d'un tamis à tambour pour le classement principal et d'un tamis à arbres expansibles pour le classement fin ou d'un mécanisme pour le triage par courant aérien, la séparation magnétique, la séparation par courant tourbillonnaire ou la séparation par analyse infrarouge proche (NIR).

18. Installation selon l'une quelconque des revendications 14 à 17, **caractérisée en ce que**, en ce qui concerne le mécanisme pour le traitement mécanique de la fraction fine riche en produits organiques, d'un séparateur magnétique ou d'un séparateur par courant tourbillonnaire.

19. Installation selon l'une quelconque des revendications 14 à 18, **caractérisée en ce que**, en ce qui concerne le mécanisme pour le traitement biologique de la fraction fine riche en produits organiques, d'un tunnel de pourrissage, d'un mécanisme de fermentation à plein régime ou d'un mécanisme de fermentation en courant partiel.

20. Installation selon l'une quelconque des revendications 14 à 19, **caractérisée en ce que**, en ce qui concerne le mécanisme pour le séchage de la fraction riche en produits organiques, d'un sécheur par contact ou d'un sécheur par convection.
